(19) Europäisches Patentamt
European Patent Office
Office européen des brevets

(11) **EP 4 657 113 A1**

(12) **EUROPEAN PATENT APPLICATION**
published in accordance with Art. 153(4) EPC

(43) Date of publication:
**03.12.2025 Bulletin 2025/49**

(21) Application number: **23918965.7**

(22) Date of filing: **30.01.2023**

(51) International Patent Classification (IPC):
**G01S 7/487** (2006.01)    **G01S 7/481** (2006.01)

(52) Cooperative Patent Classification (CPC):
**G01S 7/481; G01S 7/487**

(86) International application number:
**PCT/CN2023/073888**

(87) International publication number:
**WO 2024/159375 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Shenzhen Yinwang Intelligent Technologies Co., Ltd.**
**Shenzhen, Guangdong 518110 (CN)**

(72) Inventors:
• **ZHENG, Bin**
  **Shenzhen, Guangdong 518129 (CN)**
• **LIU, Jun**
  **Shenzhen, Guangdong 518129 (CN)**
• **ZHANG, Shaopeng**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **OPTICAL LENS AND OPTICAL IMAGING DEVICE**

(57) An optical lens and an optical imaging apparatus are provided. The optical lens may include a first cylindrical lens (T1), a second cylindrical lens (T2), and four imaging lenses (L1, L2, L3, and L4) that are coaxially disposed. The first cylindrical lens (T1) is a sagittal cylindrical lens, the second cylindrical lens (T2) is a meridional cylindrical lens, and a focal length of the optical lens in a meridional direction is not equal to a focal length of the optical lens in a sagittal direction. In addition, at least two of the four imaging lenses (L1, L2, L3, and L4) have positive focal power, and at least one of the four imaging lenses has negative focal power; and three of the four imaging lenses (L1, L2, L3, and L4) are meniscus lenses, and the other imaging lens is a plano-concave lens. The first cylindrical lens (T1) and the second cylindrical lens (T2) that are orthogonal to each other are disposed, so that the focal length of the optical lens in the meridional direction is not equal to the focal length of the optical lens in the sagittal direction, and non-isometric imaging of the optical lens in the meridional direction and the sagittal direction can be implemented. In this way, light rays with a same angular resolution can reach positions of more imaging units, so that receiving efficiency of each pixel is improved.

(1) Meridional plane

(2) Sagittal plane

**FIG. 1**

**Description**

TECHNICAL FIELD

This application relates to the field of optical imaging technologies, and in particular, to an optical lens and an optical imaging apparatus.

BACKGROUND

Lidar receiving systems are widely applied to the field of in-vehicle technologies. The lidar receiving system is configured to receive an echo signal reflected by a target object, and may determine a parameter such as distance information of the target object based on the echo signal. However, receiving efficiency of the current lidar receiving system is relatively low. As a result, detection efficiency of a lidar is relatively low.

SUMMARY

Embodiments of this application provide an optical lens and an optical imaging apparatus, to improve detection efficiency of a lidar.

According to a first aspect, an embodiment of this application provides an optical lens. The optical lens may include a first cylindrical lens, a second cylindrical lens, and four imaging lenses that are coaxially disposed. The first cylindrical lens is a sagittal cylindrical lens, and the second cylindrical lens is a meridional cylindrical lens. A focal length of the optical lens in a meridional direction is not equal to a focal length of the optical lens in a sagittal direction. In this embodiment of this application, a meridional plane may be a plane that includes an object point and an optical axis, and a meridional plane direction is briefly referred to as a meridional direction. A sagittal plane may be a plane that includes a chief ray and that is perpendicular to the meridional plane, and a sagittal plane direction is briefly referred to as a sagittal direction.

In this embodiment of this application, the first cylindrical lens and the second cylindrical lens that are orthogonal to each other are disposed in the optical lens, so that the focal length of the optical lens in the meridional direction can be not equal to the focal length of the optical lens in the sagittal direction by using anisotropy of a cylindrical lens. In other words, non-isometric imaging of the optical lens in the meridional direction and the sagittal direction can be implemented. In this way, light rays with a same angular resolution can reach positions of more imaging units, so that receiving efficiency of each pixel is improved. The optical lens in this embodiment of this application is used in an optical imaging apparatus such as a lidar or a camera apparatus, so that a dynamic range of the optical imaging apparatus can be improved by at least one time.

In a possible implementation, at least two of the four imaging lenses have positive focal power, and at least one of the four imaging lenses has negative focal power. In addition, three of the four imaging lenses are meniscus lenses, and the other imaging lens is a plano-concave lens. In this way, the four imaging lenses cooperate with the first cylindrical lens and the second cylindrical lens, to balance optical aberration, so that an image formed by the optical lens is similar to a design of image space telecentricity, to meet various performance indicators of the optical lens and improve defocus tolerance and thermal drift capabilities of the optical lens.

In some embodiments of this application, a ratio of the focal length of the optical lens in the meridional direction to the focal length of the optical lens in the sagittal direction may be 1:m, and m > 1. For example, the ratio may be 1:2, 1:3, or 1:4. Certainly, in some cases, m may alternatively be a non-integer. For example, the ratio may alternatively be 1:1.5 or 1:2.5. A specific value of m is not limited herein. In this way, non-isometric imaging of the optical lens in the meridional direction and the sagittal direction can be implemented.

In the optical lens provided in this embodiment of this application, focal power of the first cylindrical lens in the sagittal direction is consistent with focal power of the second cylindrical lens in the meridional direction. In other words, the focal power of the first cylindrical lens in the sagittal direction and the focal power of the second cylindrical lens in the meridional direction are both positive or negative. In this disposition, aberration in the meridional direction and the sagittal direction can be better balanced, so that imaging effect of the optical lens is relatively good.

During specific implementation, to implement non-isometric imaging of the optical lens in the meridional direction and the sagittal direction and better balance the aberration in the meridional direction and the sagittal direction, so that the imaging effect of the optical lens is relatively good, in this embodiment of this application, the first cylindrical lens and the second cylindrical lens may be disposed as follows:
A focal length of the first cylindrical lens and a focal length of the second cylindrical lens satisfy the following relational expression:

$$1.35 < f_{max}/f_{min} < 1.75$$

$f_{max}$ is a maximum value in the focal length of the first cylindrical lens and the focal length of the second cylindrical lens, and $f_{min}$ is a minimum value in the focal length of the first cylindrical lens and the focal length of the second cylindrical lens.

The focal length of the first cylindrical lens satisfies the following relational expression:

$$0.85 < f_1/F_1 < 1.25$$

$f_1$ is the focal length of the first cylindrical lens, and $F_1$ is the focal length of the optical lens in the sagittal direction.

The focal length of the second cylindrical lens satisfies the following relational expression:

$$1.2 < f_2/F_2 < 1.42$$

$f_2$ is the focal length of the second cylindrical lens, and $F_2$ is the focal length of the optical lens in the meridional direction.

A surface of the first cylindrical lens satisfies the following relational expression:

$$0.35 < Rx1/F1 < 0.55;$$

and

$$0.6 < Rx2/F1 < 1.1$$

The first cylindrical lens includes a first surface and a second surface, Rx1 is a curvature radius of the first surface, Rx2 is a curvature radius of the second surface, and $F_1$ is the focal length of the optical lens in the sagittal direction.

The foregoing describes specific disposition manners of the first cylindrical lens and the second cylindrical lens in this embodiment of this application. During actual application, the first cylindrical lens and the second cylindrical lens may cooperate with the four imaging lenses, to balance optical aberration, so that the design of image space telecentricity is implemented, to meet various performance indicators of the optical lens and improve defocus tolerance and thermal drift capabilities of the optical lens. With reference to the accompanying drawings, the following describes in detail specific disposition manners of the first cylindrical lens, the second cylindrical lens, and the four imaging lenses.

In some embodiments of this application, the four imaging lenses may include a first lens. The first cylindrical lens and the second cylindrical lens are located on an image side of the first lens.

The optical lens in this embodiment of this application is used in an optical imaging apparatus such as a lidar or a camera apparatus, and an image formed by the optical lens is received by an optical sensor in the optical imaging apparatus. Because a reflectivity of a surface of the optical sensor is generally high, if the first cylindrical lens (or the second cylindrical lens) is disposed as a first lens that is in the optical lens and that is close to an object side, a ghost image is prone to be generated. This is because a target signal is converged on the surface of the optical sensor through the optical lens, and is reflected to the first cylindrical lens (or the second cylindrical lens) through the surface of the optical sensor. The first cylindrical lens (the second cylindrical lens) is a sagittal cylindrical lens (a meridional cylindrical lens), and there is no focal power in the meridional direction (the sagittal direction). In this case, an image is completely formed in the meridional direction (the sagittal direction) after reflection. In addition, because sensitivity of the optical sensor is generally high, a symmetric ghost image may be formed.

In this embodiment of this application, the first cylindrical lens and the second cylindrical lens are disposed on the image side of the first lens. In other words, the first cylindrical lens and the second cylindrical lens are moved inward. In this way, light rays reflected by the first cylindrical lens and the second cylindrical lens cannot form complete images in both the meridional direction and the sagittal direction. Therefore, the ghost image caused by the first cylindrical lens (or the second cylindrical lens) is eliminated.

In a possible implementation, the four imaging lenses may further include a second lens, a third lens, and a fourth lens that are sequentially disposed from the object side to the image side. The second cylindrical lens is located on an image side of the first cylindrical lens, and the second lens, the third lens, and the fourth lens are located on an image side of the second cylindrical lens. The first cylindrical lens and the second cylindrical lens have positive focal power, the first lens, the third lens, and the fourth lens have positive focal power, and the second lens has negative focal power.

In a possible implementation, the first lens may be a meniscus lens, the second lens may be a plano-concave lens, the third lens may be a meniscus lens, and the fourth lens may be a meniscus lens.

Specific dispositions of the first cylindrical lens, the second cylindrical lens, and each imaging lens can meet various performance indicators of the optical lens, so that an image formed by the optical lens is similar to a design of image space telecentricity, non-isometric imaging in the meridional direction and the sagittal direction is implemented, and defocus tolerance and thermal shock resistance capabilities of the optical lens are improved.

In some other embodiments of this application, the four imaging lenses may include the first lens, the second lens, the third lens, and the fourth lens that are sequentially disposed from the object side to the image side. The second cylindrical lens is located on the image side of the first cylindrical lens, and the first lens, the second lens, the third lens, and the fourth lens are located on the image side of the second cylindrical lens. The first cylindrical lens and the second cylindrical lens have positive focal power, the second lens and the fourth lens have positive focal power, and the first lens and the third lens have negative focal power.

In a possible implementation, the first lens may be a plano-concave lens, and the second lens, the third lens, and the fourth lens may be all meniscus lenses.

Specific dispositions of the first cylindrical lens, the second cylindrical lens, and each imaging lens can meet various performance indicators of the optical lens, so that an image formed by the optical lens is similar to a design of image space telecentricity, non-isometric imaging in the meridional direction and the sagittal direction is implemented, and defocus tolerance and thermal shock resistance capabilities of the optical lens are improved.

Specific implementations of the first cylindrical lens, the second cylindrical lens, and each imaging lens are described in detail in Embodiment 1 and Embodiment 2. During specific implementation, specific disposition manners of the first cylindrical lens, the second cylindrical lens, and each imaging lens may be set according to an actual requirement of the optical lens. Examples are not provided herein one by one.

According to a second aspect, an embodiment of this application further provides an optical imaging apparatus. The optical imaging apparatus includes an optical sensor and any one of the foregoing optical lenses. The optical imaging apparatus may be an apparatus such as a lidar or a camera apparatus. Certainly, the optical lens may also be used in another optical imaging apparatus that needs to receive a light ray. This is not limited herein.

Because a first cylindrical lens and a second cylindrical lens that are orthogonal to each other are disposed in any one of the foregoing optical lenses, so that a focal length of the optical lens in a meridional direction can be not equal to a focal length of the optical lens in a sagittal direction by using anisotropy of a cylindrical lens. In other words, non-isometric imaging of the optical lens in the meridional direction and the sagittal direction can be implemented. In this way, light rays with a same angular resolution can reach positions of more imaging units, so that receiving efficiency of each pixel is improved. Receiving efficiency of the optical imaging apparatus including any one of the foregoing optical lenses is high, and a dynamic range of the optical imaging apparatus is improved by at least one time.

BRIEF DESCRIPTION OF DRAWINGS

FIG. 1 is a diagram of a structure of an optical lens according to an embodiment of this application;
FIG. 2 is a diagram of imaging of an optical lens in a related technology and an optical lens according to an embodiment of this application;
FIG. 3 is a curve graph of a chief ray angle of an optical lens according to an embodiment of this application; and
FIG. 4 is a diagram of another structure of an optical lens according to an embodiment of this application.

Reference numerals:

11: optical sensor; 12: protective lens; T1: first cylindrical lens; T2: second cylindrical lens; L1: first lens; L2: second lens; L3: third lens; L4: fourth lens; S1: first surface; S2: second surface; P: pixel; c: imaging unit; F1: first direction; F2: second direction.

DESCRIPTION OF EMBODIMENTS

To make the objectives, technical solutions, and advantages of this application clearer, the following further describes this application in detail with reference to accompanying drawings.

It should be noted that identical reference numerals in the accompanying drawings of this application denote identical or similar structures. Therefore, repeated description thereof is omitted. Expressions of positions and directions in this application are described by using the accompanying drawings as an example. However, changes may also be made as required, and all the changes fall within the protection scope of this application. The accompanying drawings in this application are merely used to illustrate relative position relationships and do not represent an actual scale.

To improve detection efficiency of a lidar, embodiments of this application provide an optical lens and an optical imaging apparatus. The optical lens in embodiments of this application may be used in an optical imaging apparatus such as a lidar or a camera apparatus. Certainly, the optical lens may also be used in another optical imaging apparatus that needs to receive a light ray. This is not limited herein.

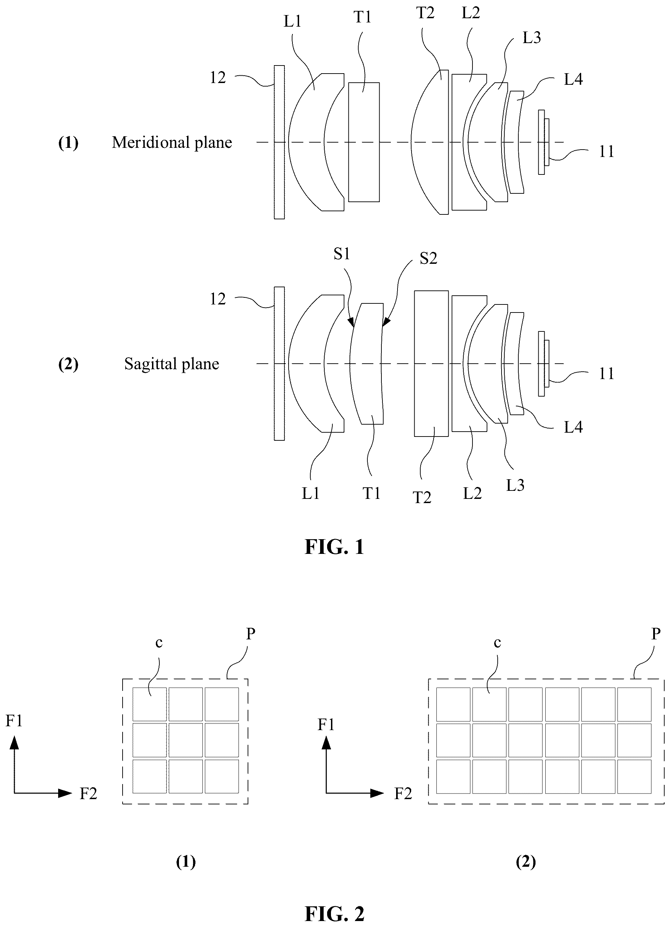

FIG. 1 is a diagram of a structure of an optical lens according to an embodiment of this application. (1) in FIG. 1 is a diagram of a structure of an optical lens in a meridional direction according to an embodiment of this application. (2) in FIG. 1 is a diagram of a structure of an optical lens in a sagittal direction according to an embodiment of this application. As shown in FIG. 1, the optical lens provided in this embodiment of this application may include a first cylindrical lens T1, a second cylindrical lens T2, and four imaging lenses (L1, L2, L3, and L4 in FIG. 1) that are coaxially disposed. The first cylindrical lens T1 is a sagittal cylindrical lens, and the second cylindrical lens T2 is a meridional cylindrical lens. A focal length of the optical lens in the meridional direction is not equal to a focal length of the optical lens in the sagittal direction. In this embodiment of this application, a meridional plane may be a plane that includes an object point and an optical axis, and a meridional plane direction is briefly referred to as a meridional direction. A sagittal plane may be a plane that includes a chief ray and that is perpendicular to the meridional plane, and a sagittal plane direction is briefly referred to as a sagittal direction.

In a possible implementation, at least two of the four imaging lenses have positive focal power, and at least one of the four imaging lenses has negative focal power. In addition, three of the four imaging lenses are meniscus lenses, and the other imaging lens is a plano-concave lens. In this way, the four imaging lenses cooperate with the first cylindrical lens and the second cylindrical lens, to balance optical aberration, so that an image formed by the optical lens is similar to a design of image space telecentricity, to meet various performance indicators of the optical lens and improve defocus tolerance and thermal drift capabilities of the optical lens.

FIG. 2 is a diagram of imaging of an optical lens in a related technology and an optical lens according to an embodiment of this application. (1) in FIG. 2 is a diagram of imaging of the optical lens in the related technology. (2) in FIG. 2 is a diagram of imaging of the optical lens according to this embodiment of this application. As shown in (1) in FIG. 2, the optical lens in the related technology performs isometric imaging. Specifically, in an image formed by the optical lens, each pixel P may include a plurality of imaging units c arranged in an array in a first direction F1 and a second direction F2, and a quantity of imaging units c in the first direction F1 is the same as a quantity of imaging units c in the second direction F2 in the pixel P. For example, in (1) in FIG. 2, each pixel P includes 3×3 imaging units c. An angular resolution of the optical lens in the first direction F1 is the same as that in the second direction F2. For example, the angular resolution of the optical lens in the first direction F1 (or the second direction F2) in (1) in FIG. 2 may be 0.13°@3c (which indicates that an angle corresponding to three imaging units c is 0.13°).

In this embodiment of this application, a first cylindrical lens and a second cylindrical lens that are orthogonal to each other are disposed in the optical lens, so that a focal length of the optical lens in a meridional direction can be not equal to a focal length of the optical lens in a sagittal direction by using anisotropy of a cylindrical lens. In other words, non-isometric imaging of the optical lens in the meridional direction and the sagittal direction can be implemented. As shown in (2) in FIG. 2, in an image formed by the optical lens in this embodiment of this application, each pixel P may include a plurality of imaging units c arranged in an array in a first direction F1 and a second direction F2, and a quantity of imaging units c in the first direction F1 is different from a quantity of imaging units c in the second direction F2 in the pixel P. For example, in (2) in FIG. 2, the pixel P has three imaging units c in the first direction F1, and has six imaging units c in the second direction F2. An angular resolution of the optical lens in the first direction F1 may be 0.13°@3c, and an angular resolution of the optical lens in the second direction F2 may be 0.13@6c (which indicates that an angle corresponding to the six imaging units c is 0.13°). In other words, in the second direction F2, light rays with a same angular resolution can reach positions of more imaging units c, so that receiving efficiency of each pixel P is improved. The optical lens in this embodiment of this application is used in an optical imaging apparatus such as a lidar or a camera apparatus, so that a dynamic range of the optical imaging apparatus can be improved by at least one time.

In some embodiments of this application, a ratio of the focal length of the optical lens in the meridional direction to the focal length of the optical lens in the sagittal direction may be 1:m, and m > 1. For example, the ratio may be 1:2, 1:3, or 1:4. Certainly, in some cases, m may alternatively be a non-integer. For example, the ratio may alternatively be 1:1.5 or 1:2.5. A specific value of m is not limited herein. In this way, non-isometric imaging of the optical lens in the meridional direction and the sagittal direction can be implemented.

Still refer to FIG. 1. In the optical lens provided in this embodiment of this application, focal power of the first cylindrical lens T1 in the sagittal direction is consistent with focal power of the second cylindrical lens T2 in the meridional direction. In other words, the focal power of the first cylindrical lens T1 in the sagittal direction and the focal power of the second cylindrical lens T2 in the meridional direction are both positive or negative. For example, in the optical lens shown in FIG. 1, the first cylindrical lens T1 has positive focal power in the sagittal direction, and focal power in the meridional direction is zero. The second cylindrical lens T2 has positive focal power in the meridional direction, and focal power in the sagittal direction is zero. In this disposition, aberration in the meridional direction and the sagittal direction can be better balanced, so that imaging effect of the optical lens is relatively good.

During specific implementation, to implement non-isometric imaging of the optical lens in the meridional direction and the sagittal direction and better balance the aberration in the meridional direction and the sagittal direction, so that the imaging effect of the optical lens is relatively good, in this embodiment of this application, the first cylindrical lens T1 and the second cylindrical lens T2 may be disposed as follows:

A focal length of the first cylindrical lens T1 and a focal length of the second cylindrical lens T2 may satisfy the following relational expression:

$$1.35 < f_{max}/f_{min} < 1.75$$

$f_{max}$ is a maximum value in the focal length of the first cylindrical lens and the focal length of the second cylindrical lens, and $f_{min}$ is a minimum value in the focal length of the first cylindrical lens and the focal length of the second cylindrical lens.

The focal length of the first cylindrical lens T1 may satisfy the following relational expression:

$$0.85 < f_1/F_1 < 1.25$$

$f_1$ is the focal length of the first cylindrical lens, and $F_1$ is the focal length of the optical lens in the sagittal direction.

The focal length of the second cylindrical lens T2 may satisfy the following relational expression:

$$1.2 < f_2/F_2 < 1.42$$

$f_2$ is the focal length of the second cylindrical lens, and $F_2$ is the focal length of the optical lens in the meridional direction.

A surface of the first cylindrical lens satisfies the following relational expression:

$$0.35 < Rx1/F1 < 0.55;$$

and

$$0.6 < Rx2/F1 < 1.1$$

The first cylindrical lens T1 may include a first surface S1 and a second surface S2, Rx1 is a curvature radius of the first surface S1, Rx2 is a curvature radius of the second surface S2, and $F_1$ is the focal length of the optical lens in the sagittal direction.

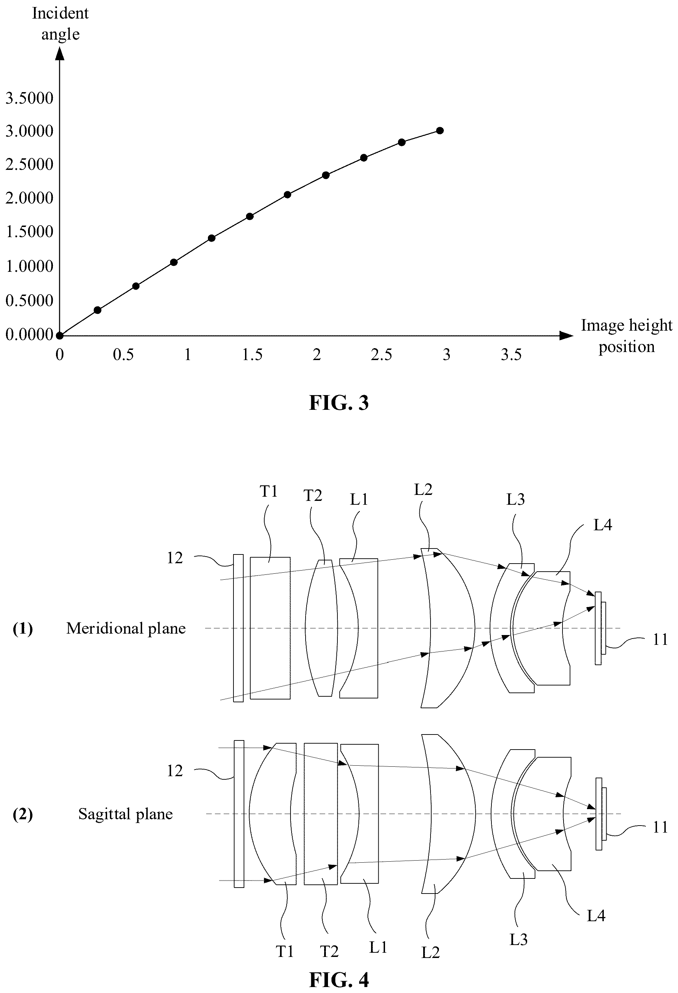

FIG. 3 is a curve graph of a chief ray angle (chief ray angle, CRA) of an optical lens according to an embodiment of this application. As shown in FIG. 3, in this embodiment of this application, a curve of the chief ray angle of the optical lens is approximately linear, and the chief ray angle is less than 3°. The optical lens in this embodiment of this application is used in an optical imaging apparatus such as a lidar or a camera apparatus. The chief ray angle of the optical lens may match an optical sensor, to implement a design of image space telecentricity.

The foregoing describes specific disposition manners of the first cylindrical lens and the second cylindrical lens in this embodiment of this application. During actual application, the first cylindrical lens and the second cylindrical lens may cooperate with the four imaging lenses, to balance optical aberration, so that the design of image space telecentricity is implemented, to meet various performance indicators of the optical lens and improve defocus tolerance and thermal drift capabilities of the optical lens. With reference to the accompanying drawings, the following describes in detail specific disposition manners of the first cylindrical lens, the second cylindrical lens, and the four imaging lenses.

Embodiment 1:

As shown in FIG. 1, in some embodiments of this application, the foregoing four imaging lenses may include a first lens L1. A first cylindrical lens T1 and a second cylindrical lens T2 are located on an image side of the first lens L1 (in FIG. 1, a right side of an optical lens is used as the image side).

The optical lens in this embodiment of this application is used in an optical imaging apparatus such as a lidar or a camera apparatus, and an image formed by the optical lens is received by an optical sensor 11 in the optical imaging apparatus. Because a reflectivity of a surface of the optical sensor 11 is generally high, if the first cylindrical lens T1 (or the second cylindrical lens T2) is disposed as a first lens that is in the optical lens and that is close to an object side (for example, in FIG. 1, a left side of the optical lens is used as the object side), a ghost image is prone to be generated. This is because a target signal is converged on the surface of the optical sensor 11 through the optical lens, and is reflected to the first cylindrical lens T1 (or the second cylindrical lens T2) through the surface of the optical sensor 11. The first cylindrical lens T1 (the second cylindrical lens T2) is a sagittal cylindrical lens (a meridional cylindrical lens), and there is no focal power in a meridional direction (a sagittal direction). In this case, an image is completely formed in the meridional direction (the sagittal direction) after reflection. In addition, because sensitivity of the optical sensor 11 is generally high, a symmetric ghost image may be formed.

In this embodiment of this application, the first cylindrical lens T1 and the second cylindrical lens T2 are disposed on the image side of the first lens L1. In other words, the first cylindrical lens T1 and the second cylindrical lens T2 are moved inward. In this way, light rays reflected by the first cylindrical lens T1 and the second cylindrical lens T2 cannot form complete images in both the meridional direction and the sagittal direction. Therefore, the ghost image caused by the first cylindrical lens T1 (or the second cylindrical lens T2) is eliminated.

Still refer to FIG. 1. The foregoing four imaging lenses may further include a second lens L2, a third lens L3, and a fourth lens L4 that are sequentially disposed from the object side to the image side (that is, in a direction from left to right in the figure). The second cylindrical lens T2 may be located on an image side of the first cylindrical lens T1, and the second lens L2, the third lens L3, and the fourth lens L4 are located on an image side of the second cylindrical lens T2.

The first cylindrical lens T1 may be a meniscus cylindrical lens with positive focal power, and the first cylindrical lens T1 is the sagittal cylindrical lens. This can balance aberration in the sagittal direction. The second cylindrical lens T2 may be a meniscus cylindrical lens with positive focal power, and the second cylindrical lens T2 is the meridional cylindrical lens. This can balance aberration in the meridional direction.

The first lens L1 may be a meniscus lens with positive focal power, the second lens L2 may be a plano-concave lens with negative focal power, the third lens L3 may be a meniscus lens with positive focal power, and the fourth lens L4 may be a meniscus lens with positive focal power.

Specific dispositions of the first cylindrical lens T1, the second cylindrical lens T2, and each imaging lens can meet various performance indicators of the optical lens, so that an image formed by the optical lens is similar to a design of image space telecentricity, non-isometric imaging in the meridional direction and the sagittal direction is implemented, and defocus tolerance and thermal shock resistance capabilities of the optical lens are improved.

During specific implementation, the optical lens in this embodiment of this application may further include a protective lens 12 located on an object side of the first lens L1. For example, the protective lens 12 may include a glass material.

Table 1 shows a curvature radius, a thickness/spacing, a refractive index, and a scattering coefficient of each component in the optical lens. In Table 1, a sequence number 1 represents the protective lens, a sequence number 2 represents a gap between the protective lens and the first lens, a sequence number 3 represents a first surface of the first lens, a sequence number 4 represents a second surface of the first lens, a sequence number 5 represents a gap between the first lens and the first cylindrical lens, a sequence number 6 represents a first surface of the first cylindrical lens, a sequence number 7 represents a second surface of the first cylindrical lens, a sequence number 8 represents a first surface of the second cylindrical lens, a sequence number 9 represents a second surface of the second cylindrical lens, a sequence number 10 represents a first surface of the second lens, a sequence number 11 represents a second surface of the second lens, a sequence number 12 represents a first surface of the third lens, a sequence number 13 represents a second surface of the third lens, a sequence number 14 represents a first surface of the fourth lens, and a sequence number 15 represents a second surface of the fourth lens. Sequence numbers 16 and 17 represent optical sensors, and a sequence number 18 represents an image side of the optical sensor. The first surface is a surface that is of the component and that is close to an object side, and the second surface is a surface that is of the component and that is close to an image side.

Table 1: Curvature radius, thickness/spacing, refractive index, and scattering coefficient of each optical element in an optical lens

| Sequence number | | Curvature radius (mm) | Thickness/Spacing (mm) | Refractive index | Dispersion coefficient (Abbe number) |
|---|---|---|---|---|---|
| 1 | | Infinite | 1.1 | 1.5168 | 64.199 |
| 2 | | Infinite | 0.1 | | |
| 3 | | 10.372 | 4.55 | 1.4954 | 81.386 |
| 4 | | 11.346 | 2.73 | | |
| 5 | | Infinite | 0.52 | | |
| 6 | Sagittal cylindrical | 14.31 | 4.03 | 1.8062 | 40.918 |
| 7 | Sagittal cylindrical | 28.496 | 4.27 | | |
| 8 | Meridional cylindrical | 12.598 | 4.8 | 1.6921 | 54.539 |
| 9 | Meridional cylindrical | Infinite | 0.17 | | |

(continued)

| Sequence number | Curvature radius (mm) | Thickness/Spacing (mm) | Refractive index | Dispersion coefficient (Abbe number) |
|---|---|---|---|---|
| 10 | Infinite | 1.6 | 1.5168 | 64.199 |
| 11 | 9.9910 | 0.66 | | |
| 12 | 9.414 | 4.23 | 2.0007 | 25.426 |

| Sequence number | Curvature radius (mm) | Thickness/Spacing (mm) | Refractive index | Dispersion coefficient (Abbe number) |
|---|---|---|---|---|
| 13 | 23.863 | 0.1 | | |
| 14 | 19.103 | 2.05 | 1.8062 | 40.918 |
| 15 | 43.102 | 2.92 | | |
| 16 | Infinite | 0.5 | 1.4585 | 67.821 |
| 17 | Infinite | 0.445 | | |
| 18 | Infinite | - | | |

Surface types (z) of the surfaces of the first cylindrical lens and the second cylindrical lens may satisfy Formula (1).

$$z = \frac{cy^2}{1+\sqrt{1-(1+k)c^2y^2}} + a_1y^2 + a_2y^4 + a_3y^6 + a_4y^8 + a_5y^{10} + a_6y^{12} + a_7y^{14} \tag{1}$$

c = 1/R, R is the curvature radius, k is a conic (conic) coefficient, and $a_1$, $a_2$, $a_3$, and the like are high-order coefficients.

The surfaces of the first lens, the first cylindrical lens, and the fourth lens may be aspheric surfaces, and surface types (z) of the surfaces of the first lens, the first cylindrical lens, and the fourth lens may satisfy Formula (2). Table 2 shows coefficients in an aspheric formula. Meanings of sequence numbers in Table 2 are the same as those in Table 1. The surface types (z) of the surfaces of the first lens, the first cylindrical lens, and the fourth lens may be set according to coefficients shown in Table 2.

$$z = \frac{cr^2}{1+\sqrt{1-(1+k)c^2r^2}} + a_1r^2 + a_2r^4 + a_3r^6 + a_4r^8 + a_5r^{10} + a_6r^{12} + a_7r^{14} + a_8r^{16} \tag{2}$$

c = 1/R, R is the curvature radius, k is a conic (conic) coefficient, and $a_1$, $a_2$, $a_3$, and the like are high-order coefficients.

Table 2: Coefficients in an aspheric formula

| Sequence number | k | $a_2$ | $a_3$ | $a_4$ |
|---|---|---|---|---|
| 3 | -2.121473 | 0.000221 | 3.518435E-07 | - |
| 4 | -1.434456 | 0.000207 | 1.939668E-06 | -4.531538E-09 |
| 6 | -8.117268 | 6.98133E-05 | -4.2888604E-08 | -4.288604E-08 |
| 7 | -99.995611 | -0.000103 | 7.518951E-07 | 7.518951E-07 |
| 14 | -3.184791 | 1.329708E-05 | 1.250041E-06 | --4.813696E-08 |
| 15 | 42.070897 | 0.000188 | 4.063711E-06 | -1.382629E-07 |

Embodiment 2:

FIG. 4 is a diagram of another structure of an optical lens according to an embodiment of this application. As shown in FIG. 4, in some other embodiments of this application, the foregoing four imaging lenses may include a first lens L1, a second lens L2, a third lens L3, and a fourth lens L4 that are sequentially disposed from an object side to an image side (that is, in a direction from left to right in the figure). A second cylindrical lens T2 may be located on an image side of a first cylindrical lens T1, and the first lens L1, the second lens L2, the third lens L3, and the fourth lens L4 may be located on an image side of the second cylindrical lens T2.

The first cylindrical lens T1 may be a meniscus cylindrical lens with positive focal power, and the first cylindrical lens T1 is a sagittal cylindrical lens. This can balance aberration in a sagittal direction. The second cylindrical lens T2 may be a biconvex cylindrical lens with positive focal power, and the second cylindrical lens T2 is a meridional cylindrical lens. This can balance aberration in a meridional direction.

The first lens L1 may be a plano-concave lens with negative focal power, the second lens L2 may be a meniscus lens with positive focal power, the third lens L3 may be a meniscus lens with negative focal power, and the fourth lens L4 may be a meniscus lens with positive focal power.

Specific dispositions of the first cylindrical lens T1, the second cylindrical lens T2, and each imaging lens can meet various performance indicators of the optical lens, so that an image formed by the optical lens is similar to a design of image space telecentricity, non-isometric imaging in the meridional direction and the sagittal direction is implemented, and defocus tolerance and thermal shock resistance capabilities of the optical lens are improved.

During specific implementation, the optical lens in this embodiment of this application may further include a protective lens 12 located on an object side of the first cylindrical lens T1. For example, the protective lens 12 may include a glass material.

Table 3 shows a curvature radius, a thickness/spacing, a refractive index, and a scattering coefficient of each component in the optical lens. In Table 3, a sequence number 1 represents the protective lens, a sequence number 2 represents a gap between the protective lens and the first cylindrical lens, a sequence number 3 represents a first surface of the first cylindrical lens, a sequence number 4 represents a second surface of the first cylindrical lens, a sequence number 5 represents a gap between the first cylindrical lens and the second cylindrical lens, a sequence number 6 represents a first surface of the second cylindrical lens, a sequence number 7 represents a second surface of the second cylindrical lens, a sequence number 8 represents a first surface of the first lens, a sequence number 9 represents a second surface of the first lens, a sequence number 10 represents a first surface of the second lens, a sequence number 11 represents a second surface of the second lens, a sequence number 12 represents a first surface of the third lens, a sequence number 13 represents a second surface of the third lens, a sequence number 14 represents a first surface of the fourth lens, and a sequence number 15 represents a second surface of the fourth lens. Sequence numbers 16 and 17 represent optical sensors, and a sequence number 18 represents an image side of the optical sensor. The first surface is a surface that is of the component and that is close to an object side, and the second surface is a surface that is of the component and that is close to an image side.

Table 3: Curvature radius, thickness/spacing, refractive index, and scattering coefficient of each optical element in an optical lens

| Sequence number | | Curvature radius (mm) | Thickness/Spacing (mm) | Refractive index | Dispersion coefficient (Abbe number) |
|---|---|---|---|---|---|
| 1 | | Infinite | 1.1 | 1.5168 | 64.199 |
| 2 | | Infinite | 0.5 | | |
| 3 | Sagittal cylindrical | 9.112 | 4.3 | 1.7698 | 49.311 |
| 4 | Sagittal cylindrical | 15.857 | 0.38 | | |
| 5 | | Infinite | 0.5 | | |
| 6 | Meridional cylindrical | 22.365 | 3.03 | 2.0007 | 25.426 |
| 7 | Meridional cylindrical | -49.093 | 1.91 | | |
| 8 | | -13.599 | 1.65 | 1.7433 | 49.222 |
| 9 | | Infinite | 5.09 | | |
| 10 | | -27.223 | 4.05 | 1.7698 | 49.311 |
| 11 | | -9.703 | 1.39 | | |
| 12 | | 14.476 | 1.77 | 1.7859 | 44.187 |

(continued)

| Sequence number | Curvature radius (mm) | Thickness/Spacing (mm) | Refractive index | Dispersion coefficient (Abbe number) |
|---|---|---|---|---|
| 13 | 8.858 | 0.2 | | |
| 14 | 6.968 | 4.73 | 1.7698 | 49.311 |
| 15 | 7.673 | 3 | | |
| 16 | Infinite | 0.5 | 1.4585 | 67.821 |
| 17 | Infinite | 0.445 | | |
| 18 | Infinite | - | | |

Surface types (z) of the surfaces of the first cylindrical lens and the second cylindrical lens may satisfy Formula (3).

$$z = \frac{cy^2}{1+\sqrt{1-(1+k)c^2y^2}} + a_1y^2 + a_2y^4 + a_3y^6 + a_4y^8 + a_5y^{10} + a_6y^{12} + a_7y^{14} \qquad (3)$$

$c = 1/R$, $k$ is a conic (conic) coefficient, and $a_1$, $a_2$, $a_3$, and the like are high-order coefficients.

The surfaces of the first cylindrical lens, the second lens, and the fourth lens may be aspheric surfaces, and surface types (z) of the surfaces of the first cylindrical lens, the second lens, and the fourth lens may satisfy Formula (4). Table 4 shows coefficients in an aspheric formula. Meanings of sequence numbers in Table 4 are the same as those in Table 3. The surface types (z) of the surfaces of the first cylindrical lens, the second lens, and the fourth lens may be set according to coefficients shown in Table 4.

$$z = \frac{cr^2}{1+\sqrt{1-(1+k)c^2r^2}} + a_1r^2 + a_2r^4 + a_3r^6 + a_4r^8 + a_5r^{10} + a_6r^{12} + a_7r^{14} + a_8r^{16} \qquad (4)$$

$c = 1/R$, R is the curvature radius, $k$ is a conic (conic) coefficient, and $a_1$, $a_2$, $a_3$, and the like are high-order coefficients.

Table 4: Coefficients in an aspheric formula

| Sequence number | k | $a_2$ | $a_3$ | $a_4$ | $a_5$ |
|---|---|---|---|---|---|
| 3 | -0.114735 | -0.000548 | 1.841934E-06 | - | - |
| 4 | -30.156684 | -0.000463 | 4.974414E-06 | - | - |
| 10 | -55.367027 | -0.000162 | 1.259249E-06 | - | - |
| 11 | -2.522457 | -0.00185 | 8.388678E-07 | - | - |
| 14 | -1.293836 | 8.213416E-05 | -9.942409E-06 | 4.485451E-07 | -1.128685E-08 |
| 15 | 1.10509 | -0.001886 | -3.368014E-05 | 9.236004E-07 | -4.211027E-08 |

Specific implementations of the first cylindrical lens, the second cylindrical lens, and each imaging lens are described in detail in Embodiment 1 and Embodiment 2. During specific implementation, specific disposition manners of the first cylindrical lens, the second cylindrical lens, and each imaging lens may be set according to an actual requirement of the optical lens. Examples are not provided herein one by one.

Based on a same technical concept, an embodiment of this application further provides an optical imaging apparatus. The optical imaging apparatus includes an optical sensor and any one of the foregoing optical lenses. The optical imaging apparatus may be an apparatus such as a lidar or a camera apparatus. Certainly, the optical lens may also be used in another optical imaging apparatus that needs to receive a light ray. This is not limited herein.

Because a first cylindrical lens and a second cylindrical lens that are orthogonal to each other are disposed in any one of the foregoing optical lenses, so that a focal length of the optical lens in a meridional direction can be not equal to a focal length of the optical lens in a sagittal direction by using anisotropy of a cylindrical lens. In other words, non-isometric imaging of the optical lens in the meridional direction and the sagittal direction can be implemented. In this way, light rays with a same angular resolution can reach positions of more imaging units, so that receiving efficiency of each pixel is improved. Receiving efficiency of the optical imaging apparatus including any one of the foregoing optical lenses is high, and a dynamic range of the optical imaging apparatus is improved by at least one time.

Although preferred embodiments of this application have been described, a person skilled in the art can make changes and modifications to these embodiments once they learn of a basic inventive concept. Therefore, the appended claims are intended to be construed as to cover the preferred embodiments and all changes and modifications falling within the scope of this application.

It is clear that a person skilled in the art can make various modifications and variations to embodiments of this application without departing from the spirit and scope of embodiments of this application. In this case, this application is intended to cover these modifications and variations of embodiments of this application provided that they fall within the scope of protection defined by the following claims and their equivalent technologies.

**Claims**

1. An optical lens, comprising a first cylindrical lens, a second cylindrical lens, and four imaging lenses that are coaxially disposed, wherein

   the first cylindrical lens is a sagittal cylindrical lens, and the second cylindrical lens is a meridional cylindrical lens;
   a focal length of the optical lens in a meridional direction is not equal to a focal length of the optical lens in a sagittal direction;
   at least two of the four imaging lenses have positive focal power, and at least one of the four imaging lenses has negative focal power; and
   three of the four imaging lenses are meniscus lenses, and the other imaging lens is a plano-concave lens.

2. The optical lens according to claim 1, wherein the four imaging lenses comprise a first lens, a second lens, a third lens, and a fourth lens that are sequentially disposed from an object side to an image side;

   the first cylindrical lens and the second cylindrical lens are located on an image side of the first lens;
   the second cylindrical lens is located on an image side of the first cylindrical lens, and the second lens, the third lens, and the fourth lens are located on an image side of the second cylindrical lens; and
   the first cylindrical lens and the second cylindrical lens have positive focal power, the first lens, the third lens, and the fourth lens have positive focal power, and the second lens has negative focal power.

3. The optical lens according to claim 2, wherein the first lens is a meniscus lens, the second lens is a plano-concave lens, the third lens is a meniscus lens, and the fourth lens is a meniscus lens.

4. The optical lens according to claim 1, wherein the four imaging lenses comprise a first lens, a second lens, a third lens, and a fourth lens that are sequentially disposed from an object side to an image side;

   the second cylindrical lens is located on an image side of the first cylindrical lens, and the first lens, the second lens, the third lens, and the fourth lens are located on an image side of the second cylindrical lens; and
   the first cylindrical lens and the second cylindrical lens have positive focal power, the second lens and the fourth lens have positive focal power, and the first lens and the third lens have negative focal power.

5. The optical lens according to claim 4, wherein the first lens is a plano-concave lens, and the second lens, the third lens, and the fourth lens are all meniscus lenses.

6. The optical lens according to any one of claims 1 to 5, wherein a ratio of the focal length of the optical lens in the meridional direction to the focal length of the optical lens in the sagittal direction is 1:m, and m > 1.

7. The optical lens according to claim 6, wherein a focal length of the first cylindrical lens and a focal length of the second cylindrical lens satisfy the following relational expression:

$$1.35 < f_{max}/f_{min} < 1.75,$$

wherein

$f_{max}$ is a maximum value in the focal length of the first cylindrical lens and the focal length of the second cylindrical lens, and $f_{min}$ is a minimum value in the focal length of the first cylindrical lens and the focal length of the second cylindrical lens.

8. The optical lens according to claim 6, wherein a focal length of the first cylindrical lens satisfies the following relational expression:

$$0.85 < f_1/F_1 < 1.25,$$

wherein
$f_1$ is the focal length of the first cylindrical lens, and $F_1$ is the focal length of the optical lens in the sagittal direction.

9. The optical lens according to claim 6, wherein a focal length of the second cylindrical lens satisfies the following relational expression:

$$1.2 < f_2/F_2 < 1.42,$$

wherein
$f_2$ is the focal length of the second cylindrical lens, and $F_2$ is the focal length of the optical lens in the meridional direction.

10. The optical lens according to claim 6, wherein a surface of the first cylindrical lens satisfies the following relational expression:

$$0.35 < Rx1/F_1 < 0.55;$$

and

$$0.6 < Rx2/F_1 < 1.1,$$

wherein
the first cylindrical lens comprises a first surface and a second surface, Rx1 is a curvature radius of the first surface, Rx2 is a curvature radius of the second surface, and $F_1$ is the focal length of the optical lens in the sagittal direction.

11. The optical lens according to any one of claims 1 to 10, wherein focal power of the first cylindrical lens in the sagittal direction is consistent with focal power of the second cylindrical lens in the meridional direction.

12. An optical imaging apparatus, comprising the optical lens according to any one of claims 1 to 11 and an optical sensor.

13. The optical imaging apparatus according to claim 12, wherein the optical imaging apparatus is a lidar or a camera apparatus.

**(1)** Meridional plane

**(2)** Sagittal plane

**FIG. 1**

**(1)**

**(2)**

**FIG. 2**

**FIG. 3**

**(1)** Meridional plane

**(2)** Sagittal plane

**FIG. 4**

## INTERNATIONAL SEARCH REPORT

| International application No. |
| --- |
| **PCT/CN2023/073888** |

| A. | CLASSIFICATION OF SUBJECT MATTER |
| --- | --- |

G01S7/487(2006.01)i; G01S7/481(2006.01)i

According to International Patent Classification (IPC) or to both national classification and IPC

| B. | FIELDS SEARCHED |
| --- | --- |

Minimum documentation searched (classification system followed by classification symbols)

IPC: G01S, G02B

Documentation searched other than minimum documentation to the extent that such documents are included in the fields searched

Electronic data base consulted during the international search (name of data base and, where practicable, search terms used)

CNABS, VEN, CNTXT, CJFD, ENTXT, ENTXTC: 柱 2w 透镜, 子午, 弧矢, 竖直, 水平, 垂直, 正交, cylind+, lens??, mirror, meridian+, sagittal+, vertical+, horizontal+, orthogonal+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115113181 A (HUAWEI TECHNOLOGIES CO., LTD.) 27 September 2022 (2022-09-27) description, paragraphs 58-112, and figures 1-9 | 1-13 |
| X | US 2019018108 A1 (NURO INC.) 17 January 2019 (2019-01-17) description, paragraphs 13-63, and figures 1-2 | 1-13 |
| X | CN 104330896 A (INSTITUTE OF OPTICS AND ELECTRONICS, CHINESE ACADEMY OF SCIENCES) 04 February 2015 (2015-02-04) description, paragraphs 35-40, and figures 1-5 | 1-13 |
| X | CN 115166986 A (FUJIAN GUANGXU TECHNOLOGY CO., LTD.) 11 October 2022 (2022-10-11) description, paragraphs 31-42, and figures 1-6 | 1-13 |
| A | CN 209765040 U (BEIJING WANJI TECHNOLOGY CO., LTD.) 10 December 2019 (2019-12-10) entire document | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 October 2023** | **20 October 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| Patent document cited in search report | | | Publication date (day/month/year) | Patent family member(s) | | | Publication date (day/month/year) |
|---|---|---|---|---|---|---|---|
| CN | 115113181 | A | 27 September 2022 | None | | | |
| US | 2019018108 | A1 | 17 January 2019 | US | 11294035 | B2 | 05 April 2022 |
| | | | | US | 2022342041 | A1 | 27 October 2022 |
| CN | 104330896 | A | 04 February 2015 | None | | | |
| CN | 115166986 | A | 11 October 2022 | None | | | |
| CN | 209765040 | U | 10 December 2019 | None | | | |

Form PCT/ISA/210 (patent family annex) (July 2022)